# EUROPEAN PATENT SPECIFICATION

(11) **EP 2 893 812 B1**
(45) Date of publication and mention of the grant of the patent: **24.08.2016**
(21) Application number: 11166445.4
(22) Date of filing: 17.05.2011
(51) Int. Cl.: A23B 7/00, A23B 7/022

(54) **Method for post-harvest treating citrus fruit**
Verfahren zur Behandlung von Zitrusfrüchten nach der Ernte
Procédé pour traiter des agrumes après la récolte

(43) Date of publication of application: 15.07.2015
(73) Proprietor: WaterDiam Sàrl, 2800 Delémont (CH)
(72) Inventor: Gobet, Jean, 2035, Corcelles (CH); Zavanella, Ciro, 1023, Crissier (CH); Hermant, Nicolas, 25130, Villers-Le-Lac (FR); Comninellis, Christos, 1031, Mex (CH); Ippolito, Antonio, 70010 Valenzano (Bari) (IT)
(74) Representative: GLN SA

(56) References cited:
- WHANGCHAI K ET AL: "Effect of electrolyzed oxidizing water and continuous ozone exposure on the control of Penicillium digitatum on tangerine cv. 'Sai Nam Pung@? during storage", CROP PROTECTION, ELSEVIER SCIENCE, GB, vol. 29, no. 4, 1 April 2010 (2010-04-01), pages 386-389, XP026938731, ISSN: 0261-2194, DOI: DOI:10.1016/J.CROPRO.2009.12.024 [retrieved on 2010-03-06]
- DATABASE MEDLINE [Online] US NATIONAL LIBRARY OF MEDICINE (NLM), BETHESDA, MD, US; September 2009 (2009-09), PANGLOLI PHILIPUS ET AL: "Reduction of Escherichia coli O157:H7 on produce by use of electrolyzed water under simulated food service operation conditions.", XP002647630, Database accession no. NLM19777886 & JOURNAL OF FOOD PROTECTION SEP 2009 LNKD- PUBMED:19777886, vol. 72, no. 9, September 2009 (2009-09), pages 1854-1861, ISSN: 0362-028X

## Description

### Technical Field

The present invention relates to a method for post-harvest treating citrus fruit.

### Background of the invention

Green, blue moulds and sour rot caused by Penicillium digitatum (Pers.:Fr.) Sacc., Penicillium italicum Wehmer, Geotrichum citri-aurantii Link ex Pers., respectively, are the most economically important postharvest diseases of citrus in all production areas. Actual losses due to these diseases are quite variable and depend on the area of production, citrus variety, tree age and condition, weather conditions during the growing and harvest season, the extent of physical injury to the fruit during harvest and subsequent handling, the effectiveness of antifungal treatments, and postharvest environment.

Both P. digitatum and P. italicum are strict wound pathogens that can infect the fruit in the grove, the packinghouse, and during distribution and marketing. They reproduce very rapidly, and their spores are ubiquitous in the atmosphere and on fruit surfaces and are readily disseminated by air currents. Therefore, the source of fungal inoculum in citrus groves and packinghouses is practically continuous during the season. The surface of virtually every citrus fruit that arrives at the packinghouse is contaminated with conidia and the inoculum may build up to high levels if appropriate packinghouse sanitation measures are not adopted in citrus processing operations.

Worldwide, citrus diseases have been primarily controlled for many years by the application of conventional fungicides in the packing line including by way of example but not limited to Imazalil, Thiabendazole (TBZ), Sodium Ortho-phenyl Phenate (SOPP), Ortho-phenyl Phenate (OPP), or different mixtures of these compounds specially formulated either as wax treatment and/or for spray, drenching and dip tank application.

However, concerns about environmental contamination and human health risks associated with fungicide residues periodically led to regulatory reviews and potential restrictions or cancellations. Likewise, traditional citrus export markets are increasingly demanding products with lower levels of pesticides in order to satisfy the safety demands from the general public.

In addition, new higher-value markets based on organically grown, sustainable, environmentally friendly, organic agricultural produce are currently arising and becoming more popular. Furthermore, the widespread and continuous use of these synthetic compounds has led to the proliferation of resistant biotypes of both P. digitatum and P. italicum and the build-up of single, double and even triple-resistant isolates in the population. There is, therefore, a clear and increasing need to find and implement control methods alternative to conventional fungicides for the control of postharvest green and blue moulds of citrus fruit.

Some solutions have been already developed for inactivating microorganisms which can infect fruit and vegetables during post harvest.

For example, inactivation of microorganisms by electrolysis of water containing chloride ions is well known and described in numerous publications as documented for example in "The efficacy of electrolysed oxidizing water for inactivating spoilage microorganisms in process water and on minimally processed vegetables" by Duncan Ongeng et al., in International Journal of Food Microbiology 109 (2006) 187-197, or "Activity of electrolyzed oxidizing water against Penicillium expansum in suspension and on wounded apples", by D.O Okull and L.F. Laborde, in Food Microbiology and Safety, Vol. 69 Nr1 2004. Electrolysis of water containing chloride ions, naturally present or added in the form of sodium chloride, results in the formation of "free chlorine" a generic term covering the various dissolved species of this molecule (dissolved chlorine, hypochlorous acid and/or hypochlorite ion). Although chlorine is not always mentioned as such and is sometime reported by several other different names such as "free oxidant", it can be understood from the operating conditions that it is indeed the main disinfectant. Whang chai et al.; Crop Protection; 2010; pp.386-389concerns the effect of electrolyzed oxidizing water and continuous ozone exposure on tangerine fruits.

As described in the document "Sanitizers for citrus packinghouse recirculated water systems", 2001 Reprint, Postharvest Information Network (http://postharvest.tfrec.wsu.edu/REP2001A.pdf) by Mark A. Ritenour, chlorine is a relatively efficient biocide. Chlorine has however two main drawbacks. Firstly organic matter (in dissolved or suspended form), that is introduced in the tank with and by the fruits, rapidly reacts with the free chlorine and destroys it. As an example, the Applicant has measured that washing 20 tons of citrus add 170 g of COD (Chemical Oxygen Demand). As these measurements indicate that 1 g of COD from the citrus washing tank destroys about 0.4 g of chlorine, a continuous, controlled, addition of a hypochlorite solution or a continuous controlled generation of chlorine from salt by electrolysis is necessary to maintain the 50-100 ppm level needed for disinfection. This makes the disinfection process complex and difficult to manage. The second reason to avoid chlorine for citrus disinfection is the well known organic chlorinated by-products formation. In presence of an excess of organic material a variety of unwanted by-products such as suspected carcinogen trichloromethane and chloroacetic acids will be formed. Chlorine in water and in air can also cause different allergies in chlorine-sensitive packinghouse workers as respiratory problems, eye irritation, headaches, etc in relation to concentration and duration of exposure. Pangloli et al; Journal of Food Protection; September 2009;vol. 72; Nr.9; pp.1854-1861, discloses the treatment of fresh fruits and vegetables, with electrolyzed water.

Disinfection by electrolyzing water not containing chloride ion is also well known, as documented for example in "The Role of Reactive Oxygen Species in the Electrochemical Inactivation of Microorganisms" by J. Jeong, J.Y. Kim , J. Yoon, in Environ. Sci. Technol. 2006, 40, 6117-6122. Reactive oxygen species formed by electrolyzing water, in particular on boron doped diamond electrodes, includes disinfectants such as OH radicals and O₃, and can cause a significant inactivation of microorganisms even the spore forming microorganisms that are difficult to inactivate only by chlorine. Published results indicate however that the amount of electrical charge necessary to achieve such disinfection is very high, typically more than 0.4 Ah/L for a weakly resistant bacteria such as E. Coli. Maintaining a low level of the highly resistant Penicillium spores in a citrus washing tank (>1000 L) would imply either impracticable long times or uneconomically large electrode surface area.

Therefore, it is an object of the invention to propose a process for post-harvest sanitation of citrus fruit without using any conventional chemicals and to accomplish satisfactory decay control by adopting integrated disease management (IDM) programs whereby one or more chemicals are replaced by an alternative, residue-free disinfection technology.

### Summary of the invention

The present invention provides a method for post-harvest treating citrus fruit which allows to avoid the disadvantages of the prior art.

Accordingly, the present invention relates to a method for post-harvest treating citrus fruit, comprising a step of washing citrus fruit, wherein said step of washing citrus fruit comprises:
a) a step of bringing water into contact with citrus fruit;
b) a step of electrolyzing said water which has been brought into contact with citrus fruit; and
c) a step of using said electrolyzed water as washing water of the citrus fruit.

Advantageously, the electrolyzed water is washing water which is placed in a washing tank.

The innovative disinfection method of the invention is based on an electrochemical process that replaces one or more chemicals traditionally used in the packing line by means of a continuous treatment of process water with electrochemical cells and current with the objective to minimize decay losses with no adverse effects on fruit quality.

The method according to the present invention comprises no step of adding chloride, as NaCl or any other salt, in the washing tank water and does not rely on chlorine for the microorganism inactivation effect.

### Brief description of the drawings

Figure 1 shows a packing line plant for post-harvest treating citrus fruit according to the invention;
Figure 2 shows the evolution of the level of E. coli as a function of time for electrolyzed freshcut lettuce wash water containing different amount of dissolved organic material
Figure 3 shows the evolution of the level of Penicillium spp. as a function of time for electrolyzed tap water and citrus wash water; and
Figure 4 shows the percentage of damaged fruits for citrus fruits treated by the method of the invention and by standard methods.

### Detailed description

The present invention relates to a method for post-harvest treating citrus fruit, comprising a step of washing citrus fruit, characterized in that said step of washing citrus fruit comprises:
a) a step of bringing water into contact with citrus fruit, in such a way that water is charged with soluble natural organic matter present in citrus fru its;
b) a step of electrolyzing said water which has been brought into contact with citrus fruit, in such a way that the organic matter released in step a) are oxidized; and
c) a step of using said electrolyzed water as washing water of the citrus fruit.

The water which can be used in the invention can be for example tap water, natural water, rain water. Preferably, the water composition used in the invention may be in conformity with local drinking water quality requirements, as for example with the European drinking water directive 98/83/EC of 3 November 1998.

It should be noted that the method of the invention is effective even if the water which has been brought into contact with citrus fruit contains no or a small amount of chloride ions. For example, the water which has been brought into contact with citrus fruit may contain an amount of chloride ions less than 500 mg/L, and preferably less than 250 mg/L, and more preferably less than 5 mg/L.

Preferably, the step of washing the citrus comprises no step of adding, in the water which has been brought into contact with citrus fruit, an additional compound. Advantageously, the water which has been brought into contact with citrus fruit does not contain any additional chloride ions.

Advantageously, the amount of oxidizing agents which may be present in the electrolyzed water (due to a formation in situ during step b)) and selected from the group consisting of reactive oxygen species and free chlorine is less than 5 mg/L, and preferably less than 1 mg/L. The reactive oxygen species are OH, O₃, H₂O₂, O₂-, ClO₂.

Preferably, the water which has been brought into contact with citrus fruit may be washing water which has been used for washing the citrus fruit.

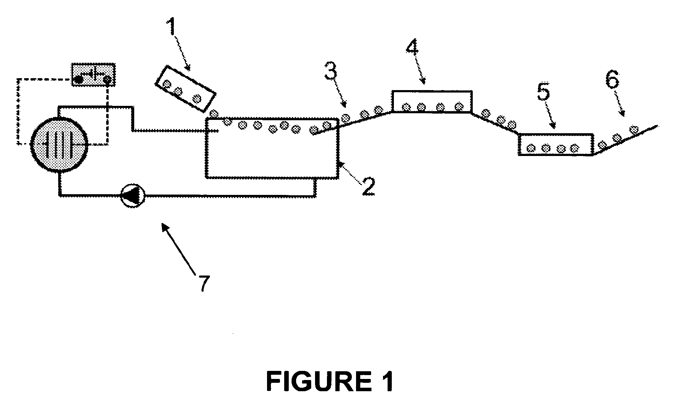

Advantageously, the method of the invention uses a packing line comprising an equipment for washing the citrus fruits. An example of such packing line plant is shown by Figure 1. It comprises a fruit box 1 containing citrus fruits, a washing dip tank 2 in which the citrus fruits are dipped and in which the electrolyzed water which is used for washing the citrus fruit is contained. The fruits are then washed with tap water 3. Then the packing line plant further contains a drier 4, an equipment 5 for waxing, and an equipment 6 for sorting, calibrating and packing the citrus fruits. The packing line plant further comprises an equipment 7 for electrolyzing the water contained in the washing dip tank 2.

In another embodiment, which is not shown, the washing water, which is electrolyzed, can be brought into contact with citrus fruit by means of showers instead of dipping.

Preferably, the washing tank and the electrodes used in step b) are designed in such a way that the ratio of the total electrode surface over the tank volume is comprised between 0.01 m²/m³ and 1.5 m²/m³, and preferably between 0.05 m²/m³ and 0.5 m²/m³.

According to another feature, the washing tank and the current used in step b) may be designed in such a way that the ratio current/tank volume is comprised between 0.0002 A/L and 12 A/L, preferably between 0.003 A/L and 3 A/L, more preferably between 0.01 A/L and 1 A/L, and more preferably between 0.03 and 0.3 A/L.

Preferably, the washing tank water may be continuously electrolyzed during the citrus washing process. Or in other embodiments, the washing tank water may be discontinuously electrolyzed during the citrus washing process.

Preferably, the washing tank water temperature is comprised between 10°C and 65°C, more preferably between 20°C and 55°C, and preferably for a contact time with the citrus fruits ranging from 10 sec, for the higher temperatures to 3 min for the lower temperatures.

The cell type is not subject to particular limitations. Monopolar or bipolar cells with or without separation or subdivision may be used. The electrodes used for the process according to the invention may be of any form, plate, expanded metal or mesh electrodes may be used. They are chemically and electrochemically stable. The cell can be operated with or without polarity reversal. If polarity reversal is applied, for example to periodically remove a carbonate scale deposit on the negative electrode(s), then all the electrodes will preferably be of the same material advantageously selected from the group comprising boron doped diamond, or any other material not being dissolved by anodic polarization such as platinum, platinized titanium, carbon, titanium covered by a coating containing at least one metal oxide selected from the group comprising RuO₂, IrO₂, SnO₂, PbO₂, TiO₂ and Ta₂O₅. Otherwise the cathode material can advantageously be chosen from another material that is stable under cathodic polarization, such as stainless steel. Particularly suitable to the process are doped diamond electrode produced according to the known gas phase deposition process (CVD). Advantageously, the diamond conductivity is obtained by the use of a suitable dopant source such as trimethyl boron in the gas phase and is between 0.005 Ohm.cm and 10 Ohm.cm. Preferably the doped diamond is deposited on a suitable base material as a continuous layer of 1 µm to 50 µm thickness. The base material is advantageously made of a ceramic material such as silicon, silicon carbide made conductive by doping or of a suitable metallic base material such niobium tantalum titanium and zirconium.

Advantageously, in step b), the electrolysis may be carried out by using a current density ranging from 2 mA/cm² to 800 mA/cm² and preferably from 10 mA/cm² to 200 mA/cm².

Preferably, a quantity of citrus higher than 1 tons/m³, and more preferably higher than 10 tons/m³ is brought into contact with water which is electrolyzed to achieve the efficiency of the method. In such conditions, the contact time of the citrus fruit with water is preferably comprised between 10s and 200s, more preferably between 20s and 60s. The water may contain a Chemical Oxygen Demand (COD) value higher than 10 mg/L, preferably higher than100 mg/L. Chemical Oxgen Demand is defined as the mg of oxygen consumed per liter of sample by the oxidation procedure by a strong oxidizing agent. COD is measured with simple portable instruments, for example with the Hach-Lange colorimeter DR/890 according to the corresponding method 8000.

In preferred embodiments using a packing line plant comprising a washing dip tank, the water contained in the washing dip tank is used for washing the citrus fruit and electrolyzed at the same time. The initial low efficiency, until the right value of COD is reached, is not problematic as initial fresh water does not contain any significant amount of spores.

In other embodiments comprising for example showers for washing the citrus fruits, the water may be brought into contact with citrus fruit before beginning the washing step until to reach the appropriate value of COD.

Preferably, the flow rate over the electrodes is comprised between 0.5 washing tank volume per hour and 20 washing tank volume per hour, preferably between 2 washing tank volume per hour and 10 washing tank volume per hour.

Surprisingly, when the water from the citrus washing tank was electrolyzed according to the method of the invention and was used to wash citrus in a packing house line the proportion of rotten fruit upon long term storage was found to be equal or lower than the proportion obtained with citrus washed in the tank containing the sodium ortho-phenylphenate commercial fungicide. Furthermore, Penicillium spp. spore inactivation by electrolysis of citrus washing water was increased by more than one order of magnitude compared to the same experiment done with water not brought into contact with citrus. Thanks to this increased efficiency, it is technically and economically feasible to maintain low levels of Penicillium spp. and other pathogens by electrolyzing the water of the washing tank of a citrus postharvest processing plant without any chemical additions.

It can be hypothesized that step a) allows to extract from the citrus fruits, and more particularly from the citrus peels, soluble natural organic compounds. In step b), water containing such natural organic compounds is electrolyzed. The electrochemical oxidation products of these natural organic compounds seem to be very efficient fungicides.

Such natural organic compounds are for example nariturin (Formula I) and hesperidin (Formula II), which may be extracted from orange peels.

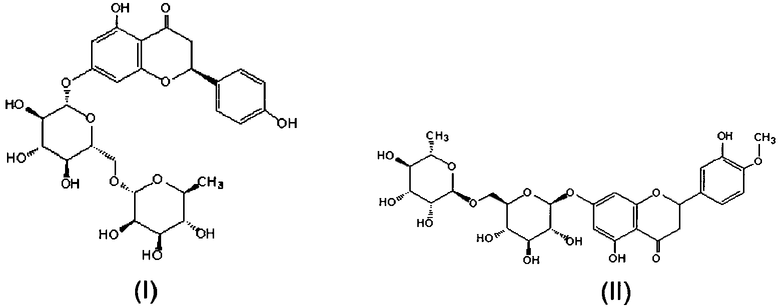

In a preferred embodiment of the invention, in which the water contained in the washing dip tank is used for washing the citrus fruit and electrolyzed at the same time, the method of the invention allows to form in situ active fungicides by the electrochemical oxidation of the soluble natural organic compounds present in the citrus fruits, for example on fruit surface and present in the washing water after having been brought into contact with said water.

This hypothesis in no way limits the claims made for the present invention.

The following examples illustrate the present invention.

### Examples:

The method of the invention has been evaluated in laboratory studies as well as in field applications by microbiological analysis of the water and by following citrus integrity during storage.

### Example 1

Example 1 illustrates the usual and expected effect of an organic contamination with non specific dissolved organic material on the disinfection by electrolysis. As a typical example, fresh cut lettuce washing water containing increasing levels of organic contamination, composed mainly of chlorophyll, amino acids, and sugars and expressed as COD was electrolyzed with boron doped diamond electrodes. Two monopolar and two bipolar electrodes with a total active surface area of 540 cm², were mounted in a Diacell 401 produced by Adamant Technologies. The wash water volume was 5 L, the current was 1.5 A (22 mA/cm²) and the flow rate was 800 L/h. The water reservoir was inoculated with 100'000 colony forming unit per mL (cfu/mL) of Escherichia coli bacteria and living E. coli concentration was measured in function of the electrolyzed time. Standard microbiological procedures were employed to count E. coli: treated water samples were diluted when needed using buffered peptone solutions, samples were plated in Chromocult coliform agar supplemented with NaCl using a spiral plater. Plates were incubated at 37 °C during for 24 h before counting in an automated plate counter and reported as log cfu/mL.

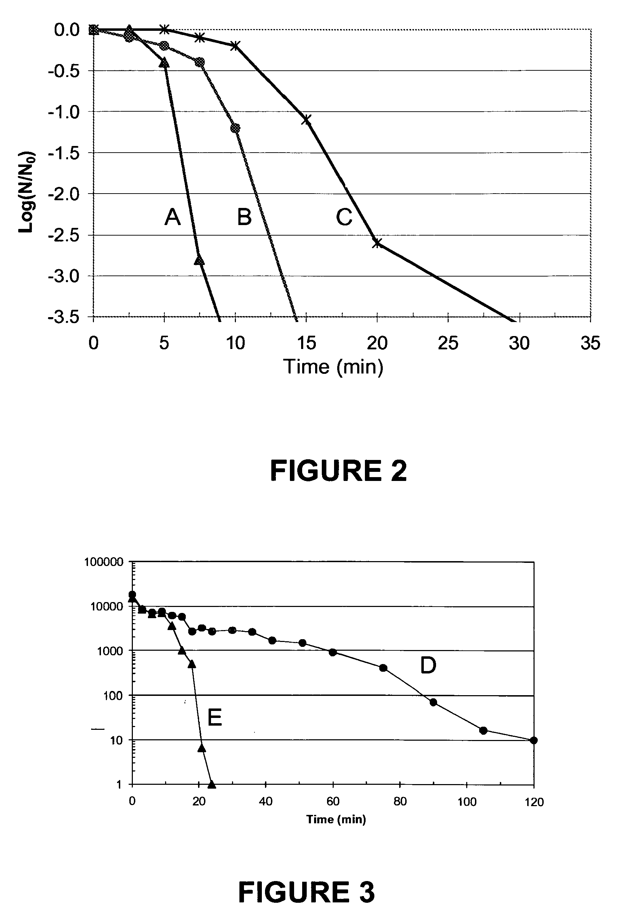

FIGURE 2 shows the logarithm of the ratio of viable E. coli over initial E. coli in fresh cut lettuce wash water in function of electrolysis time. Curve A corresponds to a COD concentration of 250 mg/L, Curve B corresponds to a COD concentration of 588 mg/L, and Curve C corresponds to a COD concentration of 808 mg/L.

Figure 2 shows the major decrease in the inactivation rate when the COD concentration increases from 250 mg/L to 800 mg/L. Therefore, E. coli inactivation by electrolysis is strongly hindered when the non specific organic contamination increases.

This is an expected behavior and similar results are obtained when treating for example surface water or waste water contaminated with non specific dissolved organics. It is generally assumed that the disinfecting agents produced by electrolysis are preferentially consumed by the organic material, as described for example by Duncan Ongeng et al. in "The efficacy of electrolyzed oxidizing water for inactivating spoilage microorganisms in process water and on minimally processed vegetables", in International Journal of Food Microbiology 109 (2006) 187-197. Ongeng et al. indicate that they encounter difficulties in decontaminating industrial vegetable process water due to the negative effect of organic load and that not surprisingly water with higher organic load was more difficult to decontaminate compared to water with less organic load.

### Example 2

Example 2 illustrates the extraordinary and unexpected results obtained when electrolysis is applied to water contaminated with dissolved organic material from Citrus wash water. Citrus wash water from a commercial packinghouse, containing 400 ppm of COD, and tap water were electrolyzed with boron doped diamond electrodes under identical conditions. Two monopolar electrodes with a total active surface area of 134 cm², were mounted in a Diacell 101 produced by Adamant Technologies. The water volume was 10 L, the current intensity was 4A (60 mA/cm²), and the flow rate was 300 L/h. The initial inoculated Penicillium digitatum spore concentration was 15'000 colony forming unit per mL (cfu/mL) and inactivation was measured in function of the electrolyzed time following standard microbiological procedures: Semi-selective potato-dextrose agar (PDA) plates were prepared in triplicate. Then for each sampling time, an aliquot of 100 µl was plated. The plates were incubated at 20°C for 48-96 h. By the end of incubation, colony forming units (cfu/mL) were counted. In addition the free oxidant concentration in the water was also measured during the electrolysis by the conventional N,N-diethyl-p-phenylenediamine (DPD) colorimetric method using a SWAN Chematest 20 instrument. In the two trials the maximum measured value was lower than 1 mg/l as expressed as chlorine (Cl₂).

Figure 3 shows the evolution of the level of Penicillium as a function of time for tap water (Curve D) and for citrus wash water (Curve E).

This result shows that, while electrolysis does not inactivate efficiently spores of Penicillium or other harmful species in tap water or natural water lacking free chlorine or free oxidants, the electrolysis of water from a citrus washing tank results in a very fast inactivation of these species. This remarkable and unexpected effectiveness allows treating the washing tank water without chemical addition in an efficient and economical way.

### Example 3

Oranges were treated with the method of the invention in industrial packinghouse equipments. The 2500 L washing tank previously containing 2.5% OPP water was emptied, cleaned and rinsed so as to contain no residual traces of OPP and filled with local tap water. A quantity of 12 tons of oranges per hour was continuously washed and the wash water was continuously electrolyzed. The electrolyzing equipment was comprised of 12 401 Adamant technologies Diacells with a total electrode surface area of 0.65 m², a current density of 60 mA/cm² was applied and a flow rate over the electrode surface of 15 m³/h was supplied by an appropriate pumping equipment. Orange samples (100 kg) were taken at regular intervals during the process and stored at ambient temperature. After 12 days of storage, the stored fruits were individually controlled for the presence of mold or other degradation by visual observation. The percentage of damaged citrus fruits which were treated with the method of the invention was compared to standard commercial treating methods.

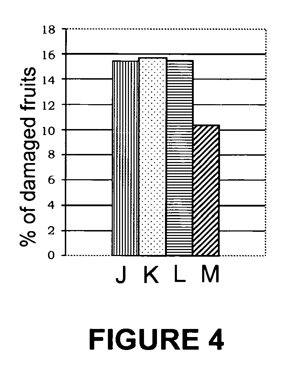

The results are shown by Figure 4:
Example J is a comparative example and corresponds to citrus fruits treated with orthophenyl phenate (OPP) biocide (2,5 %) in washing tank.
Example K is a comparative example and corresponds to citrus fruits treated with orthophenyl phenate (OPP) biocide (2,5 %) in washing tank and with Imazalil containing wax applied on the citrus skin.
Example L is an example of the invention and corresponds to citrus fruits treated with the method of the invention with electrolyzed water in the washing tank.
Example M is an example of the invention and corresponds to citrus fruits treated with the method of the invention with electrolyzed water in the washing tank and with Imazalil containing wax applied on the citrus skin.

These results show that the efficiency of the method of the invention was found to be better or equal to traditional biocides.

## Claims

1. Method for post-harvest treating citrus fruit comprising a step of washing citrus fruit, **characterized in that** said step of washing citrus fruit comprises:
a) a step of bringing water into contact with citrus fruit;
b) a step of electrolyzing said water which has been brought into contact with citrus fruit; and
c) a step of using said electrolyzed water as washing water of the citrus fruit.

2. Method according to claim 1, **characterized in that** said water which has been brought into contact with citrus fruit is washing water which has been used for washing the citrus fruit.

3. Method according to anyone of claims 1 and 2, **characterized in that** the washing water is contained in a washing tank.

4. Method according to claim 3, **characterized in that** the washing tank and electrodes used in step b) are designed in such a way that the ratio of the total electrode surface over the tank volume is comprised between 0.01 m²/m³ and 1.5 m²/m³, and preferably between 0.05 m²/m³ and 0.5 m²/m³.

5. Method according to claim 3, **characterized in that** the washing water temperature is comprised between 10°C and 65°C and preferably between 20°C and 55°C for a contact time with the citrus fruits ranging from 10 seconds to 3 minutes.

6. Method according to claim 3, **characterized in that** the washing tank water is continuously electrolyzed.

7. Method according to anyone of preceding claims, **characterized in that** the step of washing the citrus comprises no step of adding, in said water which has been brought into contact with citrus fruit, an additional compound.

8. Method according to anyone of preceding claims, **characterized in that** the amount of oxidizing agents in the electrolyzed water and selected from the group consisting of reactive oxygen species and free chlorine is less than 5 mg/L, and preferably less than 1 mg/L.

9. Method according to anyone of preceding claims, **characterized in that** the water which has been brought into contact with citrus fruit contains an amount of chloride ions less than 500 mg/L, and preferably less than 250 mg/L.

10. Method according to anyone of preceding claims, **characterized in that** the washing water is electrolyzed with electrodes comprising a material selected from the group comprising doped diamond, platinum, platinized titanium, carbon, titanium covered by a coating containing at least one metal oxide selected from the group comprising RuO₂, IrO₂, SnO₂, PbO₂, TiO₂ and Ta₂O₅.

11. Method according to anyone of preceding claims, **characterized in that** in step b), the electrolysis is carried out by using a current density ranging from 2 mA/cm² to 800 mA/cm² and preferably from 10 mA/cm² to 200 mA/cm².

12. Method according to anyone of preceding claims, **characterized in that** the water which has been brought into contact with citrus fruit contains a Chemical Oxygen Demand value higher than 10 mg/L, preferably higher than 100 mg/L.

13. Method according to anyone of preceding claims, **characterized in that** the flow rate is comprised between 0.5 washing tank volume per hour and 20 washing tank volume per hour, preferably between 2 washing tank volume per hour and 10 washing tank volume per hour.

## Patentansprüche

1. Verfahren zum Behandeln von Zitrusfrüchten nach der Ernte, das einen Schritt des Waschens der Zitrusfrüchte umfasst, **dadurch gekennzeichnet, dass** der Schritt des Waschens der Zitrusfrüchte umfasst:
a) einen Schritt des Bringens der Zitrusfrüchte in Kontakt mit Wasser;
b) einen Schritt des Elektrolysierens des Wassers, das mit den Zitrusfrüchten in Kontakt gebracht wurde; und
c) einen Schritt des Verwendens des elektrolysierten Wassers als Waschwasser der Zitrusfrüchte.

2. Verfahren nach Anspruch 1, **dadurch gekennzeichnet, dass** das Wasser, mit dem die Zitrusfrüchte in Kontakt gebracht wurden, Waschwasser ist, das zum Waschen der Zitrusfrüchte verwendet wurde.

3. Verfahren nach einem der Ansprüche 1 und 2, **dadurch gekennzeichnet, dass** das Waschwasser in einem Waschtank enthalten ist.

4. Verfahren nach Anspruch 3, **dadurch gekennzeichnet, dass** der Waschtank und in Schritt b) verwendete Elektroden derart ausgestaltet sind, dass das Verhältnis der gesamten Elektrodenoberfläche zum Tankvolumen zwischen 0,01 m²/m³ und 1,5 m²/m³ und vorzugsweise zwischen 0,05 m²/m³ und 0,5 m²/m³ liegt.

5. Verfahren nach Anspruch 3, **dadurch gekennzeichnet, dass** die Waschwassertemperatur zwischen 10 °C und 65 °C und vorzugsweise zwischen 20 °C und 55 °C für eine Kontaktzeit mit den Zitrusfrüchten im Bereich von 10 Sekunden bis 3 Minuten liegt.

6. Verfahren nach Anspruch 3, **dadurch gekennzeichnet, dass** das Waschtankwasser kontinuierlich elektrolysiert wird.

7. Verfahren nach einem der vorstehenden Ansprüche, **dadurch gekennzeichnet, dass** der Schritt des Waschens der Zitrusfrüchte keinen Schritt des Hinzufügens einer zusätzlichen Verbindung zum Wasser, das mit den Zitrusfrüchten in Kontakt gebracht wurde, umfasst.

8. Verfahren nach einem der vorstehenden Ansprüche, **dadurch gekennzeichnet, dass** die Menge an Oxidationsmittel in elektrolysierten Wasser und die aus der Gruppe ausgewählt sind, bestehend aus reaktiven Sauerstoffspezies und freiem Chlor, weniger als 5 mg/l und vorzugsweise weniger als 1 mg/l beträgt.

9. Verfahren nach einem der vorstehenden Ansprüche, **dadurch gekennzeichnet, dass** das Wasser, das mit den Zitrusfrüchten in Kontakt gebracht wurde, eine Menge an Chloridionen von weniger als 500 mg/l und vorzugsweise weniger als 250 mg/l enthält.

10. Verfahren nach einem der vorstehenden Ansprüche, **dadurch gekennzeichnet, dass** das Waschwasser mit Elektroden elektrolysiert wird, die ein Material umfassen, das aus der Gruppe ausgewählt ist, umfassend dotierten Diamant, Platin, planitiertes Titan, Kohlenstoff, Titan, das mit einer Beschichtung bedeckt ist, die zumindest ein Metalloxid enthält, das aus der Gruppe ausgewählt ist, umfassend RuO₂, IrO₂, SnO₂, PbO₂, TiO₂ und Ta2O₅.

11. Verfahren nach einem der vorstehenden Ansprüche, **dadurch gekennzeichnet, dass** in Schritt b) die Elektrolyse unter Verwendung einer Stromdichte im Bereich von 2 mA/cm² bis 800 mA/cm² und vorzugsweise 10 mA/cm² bis 200 mA/cm² durchgeführt wird.

12. Verfahren nach einem der vorstehenden Ansprüche, **dadurch gekennzeichnet, dass** das Wasser, das mit Zitrusfrüchten in Kontakt gebracht wurde, einen Wert des chemischen Sauerstoffbedarfs von mehr als 10 mg/l, vorzugsweise mehr als 100 mg/l, aufweist.

13. Verfahren nach einem der vorstehenden Ansprüche, **dadurch gekennzeichnet, dass** die Durchflussrate zwischen 0,5 Waschtankvolumen pro Stunde und 20 Waschtankvolumen pro Stunde, vorzugsweise zwischen 2 Waschtankvolumen pro Stunde und 10 Waschtankvolumen pro Stunde, liegt.

## Revendications

1. Procédé pour traiter des agrumes après la récolte comprenant une étape de lavage des agrumes, **caractérisé en ce que** ladite étape de lavage des agrumes comprend :
a) une étape consistant à mettre de l'eau en contact d'eau avec les agrumes ;
b) une étape consistant à électrolyser ladite eau qui a été mise en contact avec les agrumes ; et
c) une étape consistant à utiliser ladite eau électrolysée en tant qu'eau de lavage des agrumes.

2. Procédé selon la revendication 1, **caractérisé en ce que** ladite eau qui a été mise en contact avec les agrumes est de l'eau de lavage qui a été utilisée pour laver les agrumes.

3. Procédé selon l'une quelconque des revendications 1 et 2, **caractérisé en ce que** l'eau de lavage est contenue dans une cuve de lavage.

4. Procédé selon la revendication 3, **caractérisé en ce que** la cuve de lavage et les électrodes utilisées dans l'étape b) sont conçues de telle manière que le rapport de la surface totale de l'électrode sur le volume de la cuve est compris entre 0,01 m²/m³ et 1,5 m²/m³, et de préférence, entre 0,05 m²/m³ et 0,5 m²/m³.

5. Procédé selon la revendication 3, **caractérisé en ce que** la température de l'eau de lavage est comprise entre 10°C et 65°C et de préférence, entre 20°C et 55°C pour un temps de contact avec les agrumes allant de 10 secondes à 3 minutes.

6. Procédé selon la revendication 3, **caractérisé en ce que** l'eau de la cuve de lavage est électrolysée en continu.

7. Procédé selon l'une quelconque des revendications précédentes, **caractérisé en ce que** l'étape de lavage des agrumes ne comprend pas d'étape d'addition, dans ladite eau qui a été mise en contact avec les agrumes, d'un composé supplémentaire.

8. Procédé selon l'une quelconque des revendications précédentes, **caractérisé en ce que** la quantité d'agents oxydants dans l'eau électrolysée et choisis dans le groupe constitué d'espèces réactives de l'oxygène et de chlore libre est inférieure à 5 mg/L, et de préférence, inférieure à 1 mg/L.

9. Procédé selon l'une quelconque des revendications précédentes, **caractérisé en ce que** l'eau qui a été mise en contact avec les agrumes contient une quantité d'ions de chlorure inférieure à 500 mg/L, et de préférence, inférieure à 250 mg/L.

10. Procédé selon l'une quelconque des revendications précédentes, **caractérisé en ce que** l'eau de lavage est électrolysée avec des électrodes comprenant un matériau choisi dans le groupe comprenant diamant dopé, platine, titane platiné, carbone, titane recouvert d'un revêtement contenant au moins un oxyde métallique choisi dans le groupe comprenant RuO₂, IrO₂, SnO₂, PbO₂, TiO₂ et Ta₂O₅.

11. Procédé selon l'une quelconque des revendications précédentes, **caractérisé en ce que** dans l'étape b), l'électrolyse est réalisée en utilisant une densité de courant allant de 2 mA/cm² à 800 mA/cm² et de préférence, de 10 mA/cm² à 200 mA/cm².

12. Procédé selon l'une quelconque des revendications précédentes, **caractérisé en ce que** l'eau qui a été mise en contact avec les agrumes contient une valeur de demande chimique en oxygène supérieure à 10 mg/L, de préférence, supérieure à 100 mg/L.

13. Procédé selon l'une quelconque des revendications précédentes, **caractérisé en ce que** le débit est compris entre un volume de 0,5 cuve de lavage par heure et un volume de 20 cuves de lavage par heure, de préférence, entre un volume de 2 cuves de lavage par heure et un volume de 10 cuves de lavage par heure.
